# EUROPEAN PATENT APPLICATION

(11) **EP 1 049 225 A2**
(43) Date of publication of application: **02.11.2000**
(21) Application number: 00105054.1
(22) Date of filing: 09.03.2000
(51) Int. Cl.: H02G 3/04

(54) **Wall duct with cover**

(30) Priority: 09.03.1999 SE 9900874
(71) Applicant: THORSMAN & CO AB, S-611 29 Nyköping (SE)
(72) Inventor: Westlin, Stefan, 61335 Oxelösund (SE); Beck, Klaus, 61336 Oxelösund (SE)
(74) Representative: Johansson, Lars

(57) **Abstract**

Means at a trunking section made of metal, comprising a duct having a longitudinal front opening, which on both sides is provided with a groove (2) open in the direction of a plane (9) through the front opening and having two sides (3, 7) extending in said direction, and a cover for the closing of said front opening which cover is provided with longitudinal flanges which at the mounting of the cover on the duct engage into said grooves (2). The means is arranged to automatically create electrical contact between the cover and the duct at the mounting of the cover on the duct. Said means forms an integrated part of a groove of the duct and comprises at least one deformation of one of the sides (3, 7) of said groove (2) created by means of blanking or some other operation which deformation has at least one sharp edge which reaches into the groove (2) in order to co-operate with a flange of said cover at the mounting of the same.

## Description

### TECHNICAL FIELD

The invention relates to an arrangement at a trunking section made of metal with a cover for electrical connection between the cover and the duct and a trunking section provided with such an arrangement. The arrangement constitutes an integrated part of the duct.

### BACKGROUND ART

A trunking section usually comprises the duct as such provided with a longitudinal front opening which on both sides is provided with an outwardly directed groove and an associated cover for the closing of said front opening. The cover is provided with longitudinal flanges which at the mounting of the cover on the duct engage into said grooves.

Trunking sections of the type here discussed are used e.g. for cables distributing electrical power, for telephone and data transmission etc.. The trunking sections are usually provided with different types of outlets, switches and the like arranged on the cover or in the opening of the duct and replace in the latter case the cover in certain sections of the trunking section. Trunking sections of this type are usually used in offices but also e.g. in laboratories, workshops and in hospitals. They are usually mounted on the wall just below the windows in e.g. an office. The trunking sections are thus visible and can be considered as part of the furnishing of the room. The trunking sections are also usually provided with a high quality surface treatment and are sometimes matching in design and color to the rest of the furnishing of the room.

The material of the trunking sections could e.g. be plastic, aluminum, steel or combinations of these materials. When the trunking sections are made of metal they have to be earthed according to current standards for security reasons, electrical screening etc., which means that the cover as well as the duct as such have to be connected to earth. This is usually achieved in that the cover is electrically connected to the duct which in its turn is connected to earth.

To connect the duct which is fixed and stationary mounted on the wall with earth does not cause a problem. To the contrary a problem resides in the operation to connect the cover with the duct electrically in a secure way. The cover should be possible to dismount at service and maintenance. The whole trunking section is furthermore surface treated both to avoid corrosion and for esthetical reasons which creates a problem to bring about the electrical contact points.

There exist previous solutions making use of a short earth cable provided with contact elements at its end portions which are connected to corresponding contact elements on the cover and the duct respectively. These contact elements could have the form of a contact tongue or a flat pin connector created by means of punching directly in the back of the duct and the flange of the cover. Efficient earthing is in this case dependent on the electrical transition between the contact element of the cover and the cable and on the other hand the transition between the cable and the contact element of the duct. These transitions are connected in series.

Another arrangement of the contact elements could be achieved by means of resilient sheet metal elements arranged in the cover and the duct which in their turn are provided with blankings. The contact elements could alternatively be welded on to the said sheet metal elements. The advantage with this arrangement is that the earthing in principle could be arranged anywhere along the trunking section.

These sheet metal devices scrape by means of sharp edges at the mounting through possible oxide or surface treatment on the inside of the cover and the duct and maintain due to their resilient characteristics the electrical contact in the created contact points. A disadvantage is of course that efficient earthing will be dependent on additionally one transition between metallic elements on the respective cover and duct side which are connected in series with the previous transitions.

It is additionally obvious that the need to handle usually relatively small separate sheet metal devices at the mounting and service in the trunking sections is a disadvantage. At service and maintenance in the trunking sections one has also to keep track of these sheet metal devices and earth cables.

It is additionally previously known to create the electrical contact between the cover and the duct by means of resilient metal devices which at the mounting of the cover are first placed in the groove on the duct. In that case no cable is obviously needed in order to electrically connect the cover to the duct but the problem with small separate sheet metal devices remains.

From the European patent EP-B-0581404 it is further known a cover for trunking sections at which the flange of the cover is provided with a number of deformed section having protruding sharp edges. The object is that these sharp edges at the mounting of the cover should create the contact points with the duct. A disadvantage with this embodiment is the complicated manufacturing and the fact that the sharp edges are located on the part of the trunking section which is demounted at e.g. service. There is a risk that due to carelessness the surface treatment on visible parts of the trunking section will be damaged at the handling of the cover.

### SUMMARY OF THE INVENTION

One object of the present invention is to provide a means for earthing of a cover to a trunking section which avoids the disadvantages according to prior art. The solution according to the invention thus requires no separate sheet metal devices or special cables for the electrical connection between the cover and the duct.

An additional advantage with the solution according to the invention is that the sharp edges which at the mounting of the cover are arranged to scrape the oxide and surface treatment and in this way create the electrical contact are arranged inside the grooves of the duct and therefore normally are inaccessible at the handling of the duct and cover when mounting or at service and maintenance. A mechanic can thus not hurt himself on these edges. In relation to a solution having the corresponding sharp edges arranged on the cover there is the advantage especially at the mounting of the cover that you can not due to carelessness at the handling damage the sensitive surface treatment at the outside of the trunking section with the sharp edges. It should be noted that the scratches which are created at the surface of the cover at each mounting of the same are not visible from the outside when the cover is in its mounted position.

A further advantage with the arrangement of the means for earthing of the cover in the duct is that the cover can be manufactured very easily by means of e.g. roller forming of steel sheet without any blanking operations. Additional blanking operations on the duct do not create any complications. The manufacture of the duct is already including a number of blanking operations for holes and recesses for different purposes usually carried out in one operation at large scale manufacturing.

The problems with the solutions according to prior art are solved by means of the invention which is characterised according to the appended claims.

### DESCRIPTION OF THE DRAWINGS

Further objects and advantages with the invention will be apparent from the following description which is given with reference to the appended drawings on which:
Figure 1 shows in a perspective view a trunking section provided with an arrangement for electrical connection between cover and duct according to prior art.
Figure 2 shows schematically a section through a part of the front of the duct according to the invention with a groove at one side of the front opening.
Figure 3 shows schematically in a perspective view a part of the side of a groove closest to the front opening according to the invention.

### PREFERED EMBODIMENT

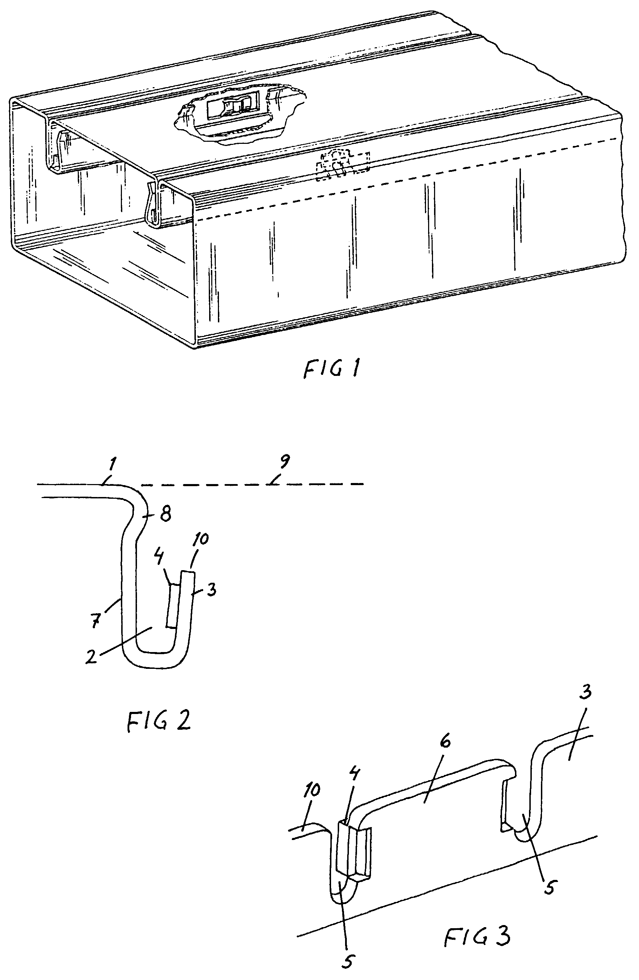

Figure 1 shows in a perspective view a trunking section provided with an electrical connection arrangement according to the above mentioned European patent EP-B-0518404.

Figure 2 shows schematically a section through a part of the front 1 of the duct according to the invention. The front opening extends in the plane 9 of the front 1 which has been marked with a dashed line in the direction of the arrow from the knee 8. The figure also shows a groove 2 at one side of the front opening. On the other side of the front opening there is a symmetrical arrangement with a second groove. The groove is open in the direction of the plane 9 of the front opening and has two sides 3, 7 which extend in the same direction.

The cover (not shown) has in section a U-profile with two legs or flanges arranged to co-operate with the grooves of the front at the mounting and holding of the cover.

An arrangement 4 for automatically creating an electrical connection between the cover and the duct at the mounting of the cover without the use of special cables or sheet metal devices of the type described above is shown on the inside of the side 3 of the groove. This arrangement could have the form of a deformation of the side 3 created by means of blanking or some other operation which deformation reaches into the groove 2 in order to co-operate with the inside of one of the flanges of the cover at the mounting of the same. The arrangement thus forms an integrated part of the duct at the inside of the groove. The blanking operation is carried out in such a way that there will be created at least one appropriate sharp edge on the means 4.

In a variant of the embodiment the opposite wall 7 in the groove 2 could instead be deformed in a corresponding way.

Such means could be arranged in one or both grooves limiting the front opening. Due to the fact that it is impossible to know in advance how close earthing points will be needed along the trunking section, which depends on the equipment of the trunking section, it is appropriate to arrange the means with relatively short longitudinal distance in between. It is also possible to make use of the fact that the cover in principle only has to be earthed in one of the grooves and therefore arrange the earthing points in the longitudinal direction of the trunking section alternating between the two grooves.

Figure 3 shows schematically in a perspective view a part of the side 3 of a groove 2 closest to the front opening. U-formed recesses 5 have in this embodiment been made in the side of the groove from the free edge 10 of the groove essentially perpendicularly to the longitudinal direction of the groove. In doing so tongues 6 are created the elastic properties of which in the direction towards the groove and consequently the flange of a mounted cover could be controlled by means of varying the distance between the recesses 5. In the illustrated example the tongue 6 is provided at each side with a means 4 for earthing. Other embodiments could have only one arrangement 4 on each tongue. The width of the recesses 5 could of course also be varied.

## Claims

1. Means at a trunking section made of metal, comprising a duct having a longitudinal front opening, which on both sides is provided with a groove (2) open in the direction of a plane (9) through the front opening and having two sides (3, 7) extending in said direction, and a cover for the closing of said front opening which cover is provided with longitudinal flanges which at the mounting of the cover on the duct engage into said grooves (2) which means is arranged to automatically create electrical contact between the cover and the duct at the mounting of the cover on the duct, **characterised in that** said means forms an integrated part of a groove of the duct and comprises at least one deformation of one of the sides (3, 7) of said groove (2) created by means of blanking or some other operation which deformation has at least one sharp edge which reaches into the groove (2) in order to co-operate with a flange of said cover at the mounting of the same.

2. Means according to claim 1, **characterised in that** said deformation is arranged on that side (3) of the groove (2) which is closest to the front opening.

3. Mean according to claim 2, **characterised in that** it additionally comprises a U-formed recess (5) in the free upper edge (10) in the side (3) of the groove (2) closest to the front opening essentially perpendicularly to the longitudinal direction of the groove and that said deformation is arranged on at least one of the essentially vertical sides of the recess (5).

4. Trunking section made of metal, comprising a duct having a longitudinal front opening, which on both sides is provided with a groove (2) open in the direction of a plane (9) through the front opening and having two sides (3, 7) extending in said direction, and a cover for the closing of said front opening which cover is provided with longitudinal flanges which at the mounting of the cover on the duct engage into said grooves (2) **characterised in that** it comprises at least one means arranged to automatically create electrical contact between the cover and the duct at the mounting of the cover on the duct, which means forms an integrated part of a groove of the duct and comprises at least one deformation of one of the sides (3, 7) of said groove (2) created by means of blanking or some other operation which deformation has at least one sharp edge which reaches into the groove (2) in order to co-operate with a flange of said cover at the mounting of the same.

5. Trunking section according to claim 4, **characterised in that** said deformation is arranged on that side (3) of the groove (2) which is closest to the front opening.

6. Trunking section according to claim 5, **characterised in that** it additionally comprises a number of U-formed recesses (5) in the free upper edge (10) in the side (3) of at least one of the grooves (2) closest to the front opening, essentially perpendicularly to the longitudinal direction of the groove, and that said deformation is arranged on at least one of the essentially vertical sides of the recess (5), creating between two successive recesses (5) a tongue (6) in the side of the groove the elastic characteristics of which, in the direction into the groove and consequently the flange on a mounted cover, can be controlled by means of varying the distance between the recesses (5).
